# EUROPEAN PATENT APPLICATION

(11) **EP 4 391 515 A1**
(43) Date of publication of application: **26.06.2024**
(21) Application number: 23214850.2
(22) Date of filing: 07.12.2023
(51) Int. Cl.: H04N 1/00, G03G 15/00, G06F 3/12, G06F 11/07

(54) **INFORMATION PROCESSING APPARATUS, IMAGE FORMING APPARATUS, METHOD FOR CONTROLLING IMAGE FORMING APPARATUS, AND PROGRAM**

(30) Priority: 19.12.2022 JP 2022202202
(71) Applicant: Konica Minolta, Inc., Tokyo 100-7015 (JP)
(72) Inventor: Yamamura, Akira, Tokyo, 100-7015 (JP)
(74) Representative: Gille Hrabal Partnerschaftsgesellschaft mbB Patentanwälte

(57) **Abstract**

An information processing apparatus includes an acquirer (11) and a display information generator (15). The acquirer (11) is configured to acquire acquisition information and environment information of an image forming apparatus (130). The acquisition information includes at least one of job information, error information, time information, or machine information of the image forming apparatus (130). The display information generator (15) is configured to generate display information to be displayed on a display (110a, 130a, 140a, 141a) by associating the acquisition information acquired by the acquirer (11) out of the job information, error information, time information, or machine information with the environment information.

## Description

### BACKGROUND

### Technical Field

The disclosure relates to an information processing apparatus, an image forming apparatus, a method of controlling the image forming apparatus, and a program.

### Description of Related Art

Image forming apparatuses have different printing productivity depending on a usage environment (for example, a range of temperature or humidity). Because of this, there is an image forming apparatus of prior art which notifies whether or not a usage environment (for example, a range of temperature and humidity) is suitable for image formation (for example, see Patent Literature 1, Japanese Unexamined Patent Application Publication No. 7-120992).

### SUMMARY

In the image forming apparatus disclosed in Patent Literature 1 (Japanese Unexamined Patent Application Publication No. 7-120992), because time for image stabilization or the like varies depending on an installation situation, a usage situation, or a usage environment, printing productivity depends on these factors significantly. The Applicant therefore realized that it would be favorable to make dependency on the usage environment visible.

The disclosure has been made in view of the problem of the prior art described above. An object of the disclosure is to provide an information processing apparatus, an image forming apparatus, a method of controlling the image forming apparatus, and a program for suitably notifying a user of a usage environment (for example, a range of temperature or humidity).
(1) To achieve at least one of the abovementioned objects, according to a first aspect of the disclosure, an information processing apparatus including an acquirer and a display information generator. The acquirer is configured to acquire acquisition information and environment information of an image forming apparatus, the acquisition information including at least one of job information, error information, time information, or machine information of the image forming apparatus. The display information generator is configured to generate display information to be displayed on a display by associating the acquisition information with the environment information, the acquisition information being the job information, the error information, the time information, or the machine information that has been acquired by the acquirer.
(2) A second aspect of the disclosure provides the information processing apparatus according to the first aspect, in which the environment information includes temperature and humidity information.
(3) A third aspect of the disclosure provides the information processing apparatus according to the first aspect, in which the display information generator is configured to do the following. To change display information generated by associating the job information with the environment information into a format that classifies information by job, to change display information generated by associating the error information with the environment information into a format that classifies information by error, to change display information generated by associating the time information with the environment information into a format that classifies information by time, or to change display information generated by associating the machine information with the environment information into a format that classifies information by machine.
(5) A fifth aspect of the disclosure provides the information processing apparatus according to the first aspect, in which the display information generator is configured to generate display information that is unified for each day and sorted according to the environment information.
(6) A sixth aspect of the disclosure provides the information processing apparatus according to the first aspect, in which the display information generator is configured to generate display information that displays the environment information along a time axis.
(7) A seventh aspect of the disclosure provides the information processing apparatus according to the first aspect, in which the display information generator is configured to generate display information by associating the machine information with the environment information.
(8) An eighth aspect of the disclosure provides the information processing apparatus according to the first aspect, in which the display information generator is configured to generate display information in which the environment information is classified into arbitrary sections.
(9) A ninth aspect of the disclosure provides the information processing apparatus according to the first aspect, in which the environment information includes environment information of an image forming section provided in the image forming apparatus.
(10) A tenth aspect of the disclosure provides The information processing apparatus according to the first aspect that further includes a warning determiner that is configured to determine whether to issue a warning to a user. The warning determiner is configured to determine whether an environment of an image forming section provided in the image forming apparatus is unsuitable for image formation and to generate warning information when the environment is unsuitable.
(11) An eleventh aspect of the disclosure provides the information processing apparatus according to the first aspect, further including an environment information notifier that is configured to output a control signal based on the environment information to an environment changer. The environment information includes environment information of an image forming section provided in the image forming apparatus. The environment information notifier is configured to cause the environment changer to perform control in accordance with the environment information of the image forming section by outputting a control signal based on the environment information of the image forming section to the environment changer.
(12) A twelfth aspect of the disclosure provides the information processing apparatus according to the first aspect, in which the environment information includes environment information of a sheet feed section provided in the image forming apparatus.
(13) A thirteenth aspect of the disclosure provides the information processing apparatus according to the first aspect, further including a warning determiner that is configured to determine whether to issue a warning to a user. The warning determiner is configured to determine whether an environment of a sheet feed section provided in the image forming apparatus is unsuitable for feeding a sheet and to generate warning information when the environment is unsuitable.
(14) A fourteenth aspect of the disclosure provides the information processing apparatus according to the first aspect, further including an environment information notifier that is configured to output a control signal based on the environment information to an environment changer. The environment information includes environment information of a sheet feed section provided in the image forming apparatus. The environment information notifier is configured to cause the environment changer to perform control in accordance with the environment information of the sheet feed section by outputting a control signal based on the environment information of the sheet feed section to the environment changer.
(18) An eighteenth aspect of the disclosure provides a method for controlling an image forming apparatus. The method includes acquiring acquisition information and environment information of the image forming apparatus. The acquisition information includes at least one of job information, error information, time information, or machine information of the image forming apparatus. The method also includes generating display information to be displayed on a display by associating the acquisition information with the environment information. The acquisition information is the job information, the error information, the time information, or the machine information that has been acquired.
(19) A nineteenth aspect of the disclosure provides a program for causing a computer to perform operations. The operations include acquiring acquisition information and environment information of an image forming apparatus. The acquisition information includes at least one of job information, error information, time information, or machine information of the image forming apparatus. The operations also include generating display information to be displayed on a display by associating the acquisition information with the environment information. The acquisition information is the job information, the error information, the time information, or the machine information that has been acquired.

### Advantageous Effects

According to the disclosure, it is possible to suitably notify a user of a usage environment (for example, a range of temperature and humidity).

### BRIEF DESCRIPTION OF DRAWINGS

The advantages and features provided by one or more embodiments of the disclosure will become more fully understood from the detailed description given hereinbelow and the appended drawings which are given by way of illustration only, and thus are not intended as a definition of the limits of the present invention.
FIG. 1 is a diagram illustrating a configuration of an image forming system including an information processing apparatus according to an embodiment.
FIG. 2 is a configuration diagram of an information processing apparatus according to the to an embodiment.
FIG. 3 is a configuration diagram of an image forming apparatus used in an embodiment.
FIG. 4A is a flowchart (1) showing an operation example of an information processing apparatus according to an embodiment.
FIG. 4B is a flowchart (2) showing an operation example of an information processing apparatus according to an embodiment.
FIG. 4C is a flowchart (3) showing an operation example of an information processing apparatus according to an embodiment.
FIG. 5 is a graph showing an example of classifying temperature and humidity information as environment information into sections.
FIG. 6 is an explanatory diagram (1) illustrating an example of display information.
FIG. 7 is an explanatory diagram (2) illustrating an example of display information.
FIG. 8 is an explanatory diagram (3) illustrating an example of display information.
FIG. 9 is an explanatory diagram illustrating a modification of display information.
FIG. 10 is an explanatory diagram for a case of specifying arbitrary environment information.
FIG. 11 is an explanatory diagram of a display icon.

### DETAILED DESCRIPTION OF EMBODIMENTS

Hereinafter, one or more embodiments of the disclosure will be described with reference to the drawings. However, the scope of the disclosure is not limited to the disclosed embodiments.

Hereinafter, embodiments of the disclosure will be described in detail with reference to the drawings. It should be noted that the drawings are merely schematic to the extent that the disclosure can be fully understood. Therefore, the disclosure is not limited to the examples illustrated in the drawings. Furthermore, in the respective drawings, common constituent elements and similar constituent elements are denoted by the same reference signs, and redundant description thereof is omitted.

Note that the conventional technology disclosed in Patent Literature 1 (Japanese Unexamined Patent Application Publication No. 7-120992) has the following problem in addition to the above-described problem. An embodiment of the disclosure is able to provide an information processing apparatus that also solves the following problem.

That is, the conventional technology disclosed in Patent Literature 1 can inform a user on usage environment information (e.g., temperature and humidity range information) prior to printing, but cannot inform the user of, for example, a change in environment during execution of a job (particularly, a change in environment in time series). With the conventional technology disclosed in Patent Literature 1, it is not known whether printing is being performed in a temperature and humidity range in which productivity is high. As a result, printing may be performed in a temperature and humidity range in which productivity is low. Therefore, also in this respect, the conventional technology disclosed in Patent Literature 1 highlights the need to suitably notify the user of the usage environment (for example, a range of temperature and humidity).

### Outline of Information Processing Apparatus

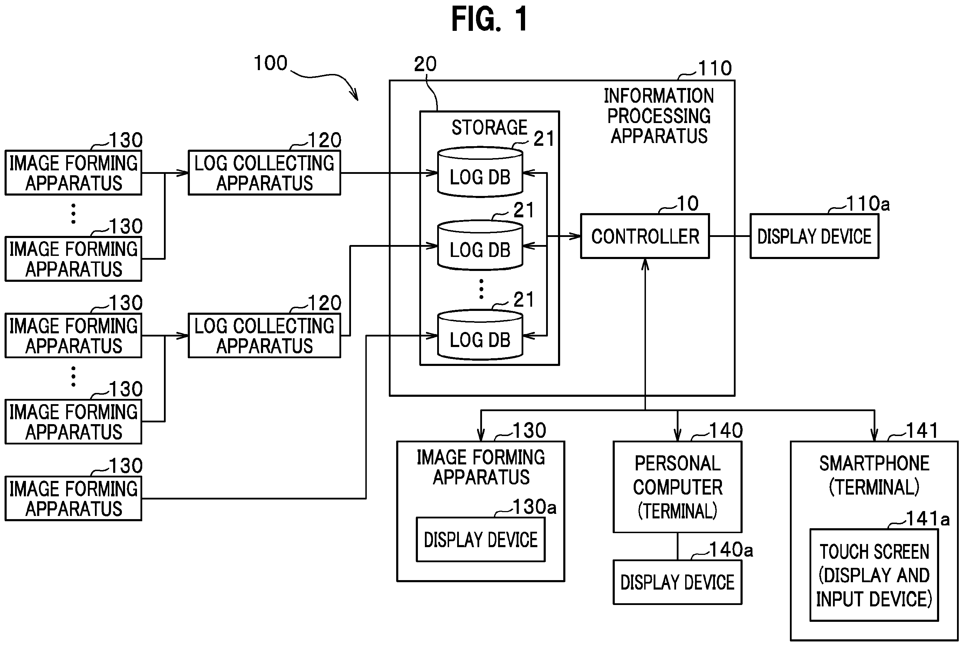

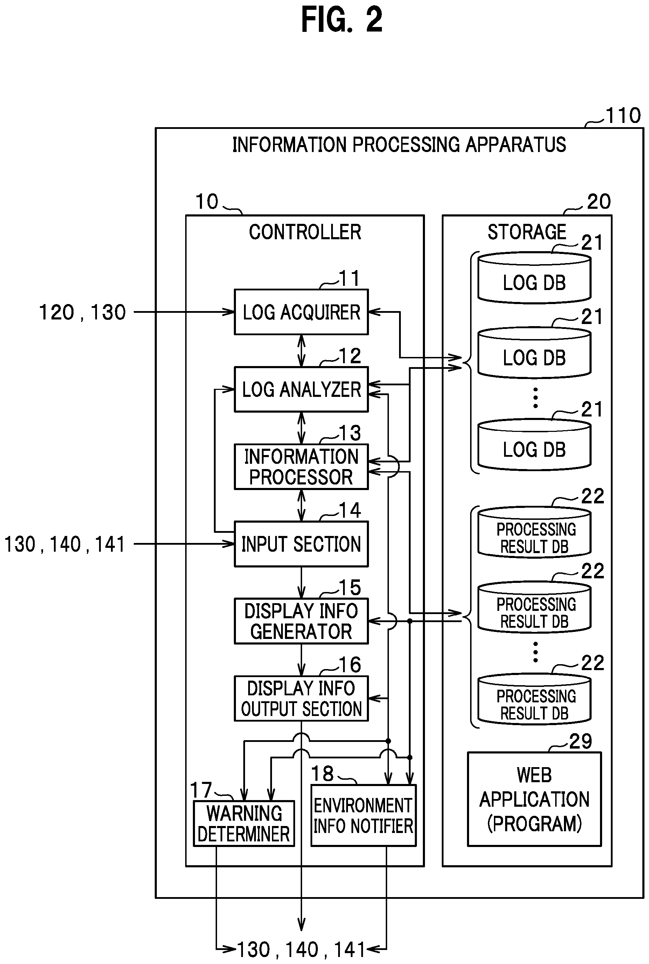

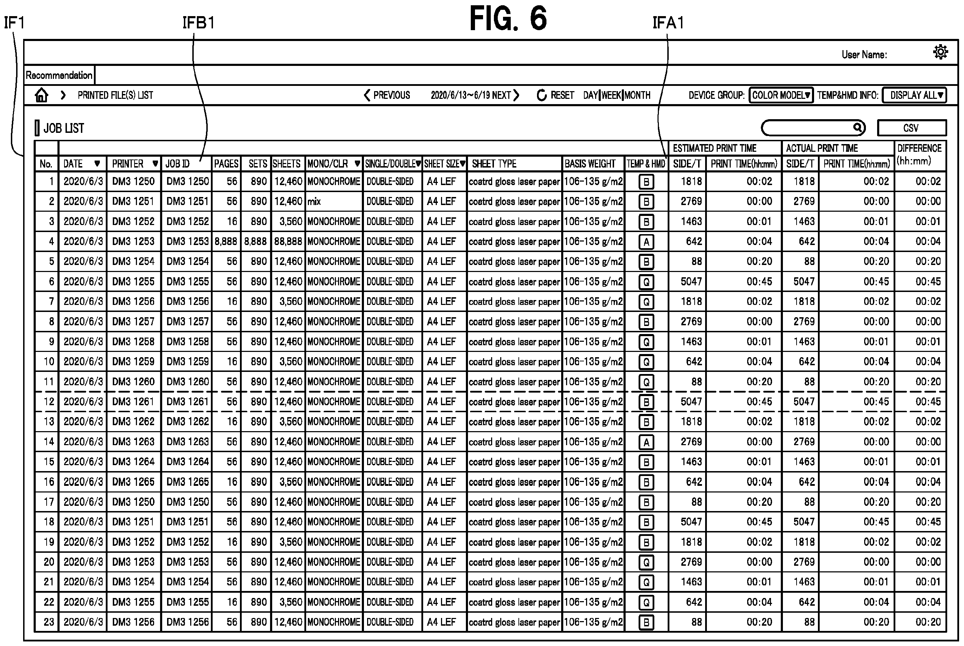

An information processing apparatus 110 (see FIGS. 1 and 2) according to an embodiment of the disclosure generates, for example, display information IF1, IF2, IF3, or IF4 shown in FIGS. 6 to 9 and presents the display information to a user in order to facilitate the identification of a process that becomes a bottleneck (obstacle) in the execution of a job related to a production timeline of a plurality of jobs.

### Configuration of Information Processing Apparatus

A configuration of the information processing apparatus 110 according to an embodiment of the disclosure will be described below with reference to FIGS. 1 and 2. FIG. 1 is a diagram illustrating a configuration of an image forming system 100 including an information processing apparatus 110 according to the present embodiment. FIG. 2 is a block diagram of the information processing apparatus 110. Here, description will be given on the assumption that the information processing apparatus 110 is an apparatus for monitoring an environment condition or a machine trouble of an image forming apparatus 130 (a printer). The information processing apparatus 110 is not limited to the image forming apparatus 130 and may be an apparatus that monitors an environment condition or a machine trouble of any apparatus. That is, the use of the information processing apparatus 110 is not limited to monitoring in image formation. In the present embodiment, the image forming apparatus 130 may be referred to as a "machine". Note that a part of the image forming apparatus 130 (for example, a mechanism of a unit or a function) may be a "machine", and the image forming apparatus 130 may include a plurality of "machines".

The image forming system 100 is a system in which an image is formed with an image forming apparatus 130. The image forming system 100 includes an information processing apparatus 110, and the information processing apparatus 110 monitors an environment condition or a machine trouble of the image forming apparatus 130.

In the example illustrated in FIG. 1, the image forming system 100 includes an information processing apparatus 110, one or more (two in the illustrated example) log collecting apparatuses 120, and a plurality of image forming apparatuses 130. Although a plurality of the image forming apparatuses 130 are provided in the example illustrated in FIG. 1, there may also be a case where there is only one image forming apparatus 130. The apparatuses are communicably connected to each other via a network (not shown).

The information processing apparatus 110 is an apparatus that monitors an environment condition or a machine trouble of a monitoring target (here, the image forming apparatus 130).

The log collecting apparatus 120 is an apparatus that collects, as log information, information indicating an environment condition or a machine condition from the image forming apparatus 130 and outputs the log information to the information processing apparatus 110.

The image forming apparatus 130 is an apparatus that forms an image. The image forming apparatus 130 is, for example, a printing machine that prints an image on a medium such as paper or cloth. The image forming apparatus 130 is communicably connected to the information processing apparatus 110 directly or via a log collecting apparatus 120.

The information processing apparatus 110 includes a controller 10 and a storage 20. The information processing apparatus 110 may, for example, be a server communicably connected to the image forming apparatus 130 or may be a cloud server arranged on a cloud. In the storage 20, a log database 21 (hereinafter, "database" may be referred to as "DB") in which log information (information indicating an environment condition or a machine condition) of the image forming apparatus 130 is stored is built. The information processing apparatus 110 generates, for example, display information IF1, IF2, IF3, or IF4 illustrated in FIGS. 6 to 9 based on the log information of the image forming apparatus 130 or the like, and displays the display information on an arbitrary display device. For example, the information processing apparatus 110 may display the display information IF1, IF2, IF3, or IF4 on a display device 110a connected thereto, on a display device 130a of the image forming apparatus 130, on a display device 140a connected to a personal computer 140, or on a touch screen 141a of a smartphone 141. The personal computer 140 and the smartphone 141 are terminals of a user. A tablet terminal may be used as a terminal instead of a smartphone 141.

As illustrated in FIG. 2, the controller 10 of the information processing apparatus 110 includes a log acquirer 11, a log analyzer 12, an information processor 13, an input section 14, a display information generator 15, and a display information output section 16. These are realized by a central processing unit (CPU) executing a web application 29 (a program) stored in advance in a ROM (Read Only Memory) constituting a part of the storage 20. The web application 29 (the program) is stored in a non-transitory storage medium 99. The non-transitory storage medium 99 is a memory storage medium, an optical storage medium, a magnetic storage medium, or the like. The web application 29 (the program) is installed on the information processing apparatus 110 from the non-transitory storage medium 99 directly, via an information reading unit (not illustrated), or indirectly, via a communication line (not illustrated).

The log acquirer 11 is a section that acquires log information (information indicating an environment condition or a machine condition) of each image forming apparatus 130 from each image forming apparatus 130 via the log collecting apparatus 120 or directly and stores the log information in the log database 21.

The log analyzer 12 is a section for analyzing the log information of each image forming apparatus 130.

The information processor 13 is a section that identifies an environment condition or a machine condition based on the log information or the like of the image forming apparatus 130. The information processor 13 generates, for example, display source information (not illustrated) that is a source of display information IF1, IF2, IF3, or IF4 illustrated in FIGS. 6 to 9 for each arbitrary item (for example, an environment condition, a machine condition, or the like), and stores the display source information in a processing result database 22. Here, the "display source information" refers to information used for generation of the display information. That is, for example, the display information IF1, IF2, IF3, or IF4 shown in FIGS. 6 to 9 can be generated by extracting, processing, or editing a part of the display source information or by combining parts of the display source information. The information processor 13 may use information generated by extracting, processing, or editing a part of the display source information or combining parts of the display source information as display source information for generating arbitrary display information. The information processing apparatus 110 can quickly generate arbitrary display information by generating display source information in advance and storing the display source information in the processing result database 22.

The input section 14 is a section that receives various kinds of information and instructions.

The display information generator 15 is a section that generates, for example, display information IF1, IF2, IF3, or IF4 illustrated in FIGS. 6 to 9.

The display information output section 16 is a section for outputting the display information IF1, IF2, IF3, or IF4 (see FIGS. 6 to 9) generated by the display information generator 15 to the outside.

In the example illustrated in FIG. 2, the controller 10 of the information processing apparatus 110 includes a warning determiner 17 and an environment information notifier 18.

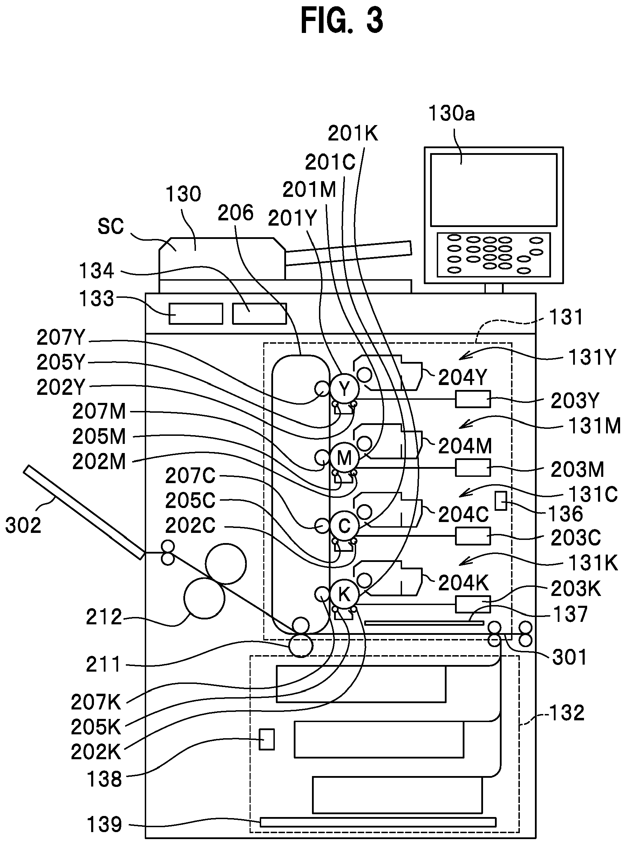

The warning determiner 17 is a section that determines whether to issue a warning to a user. The warning determiner 17 may determine whether an environment of an image forming section 131 (FIG. 3) provided in the image forming apparatus 130 is an unsuitable environment for image formation and may generate warning information in a case of an unsuitable environment. In a case where the environment of the image forming section 131 (FIG. 3) is an unsuitable environment for image formation, printing speed tends to become slow or printing may become non-executable. In such a case, the warning determiner 17 notifies the user with warning information such as "The temperature and humidity environment of the image forming section is in an unsuitable state. Please operate the heater of the image forming section." Further, the warning determiner 17 may determine whether or not an environment of a sheet feed section 132 (FIG. 3) provided in the image forming apparatus 130 is an unsuitable environment for paper conveyance and may generate warning information in a case of an unsuitable environment. In a case where the environment of the sheet feed section 132 (FIG. 3) is an unsuitable environment for conveyance of a sheet, a plurality of sheets can be conveyed while being stuck together or a sheet may not be conveyed. In such a case, the warning determiner 17 notifies the user with warning information such as "The temperature and humidity environment of the sheet feed section is in an unsuitable state. Please operate the heater of the sheet feed section."

The environment information notifier 18 is a section for notifying a user of environment information of the image forming apparatus 130 or for causing the image forming apparatus 130 to perform control in accordance with the environment information. By outputting a control signal based on environment information of the image forming section 131 (FIG. 3) to a heater 137 (FIG. 3), the environment information notifier 18 may cause the heater 137 (FIG. 3) to operate in accordance with the environment information of the image forming section 131 (FIG. 3). Further, by outputting a control signal based on environment information of the sheet feed section 132 (FIG. 3) to a heater 139 (FIG. 3), the environment information notifier 18 may cause the heater 139 (FIG. 3) to operate in accordance with the environment information of the sheet feed section 132 (FIG. 3).

In the storage 20, a log database 21 and a processing result database 22 are built. A web application 29 is stored in the storage 20 in advance.

The log database 21 is a database that stores log information (information indicating an environment condition or a machine condition) of the image forming apparatus 130.

The processing result database 22 is a database in which a calculation processing result by the information processing section 13 is stored. An example of the arithmetic processing result by the information processor 13 includes display source information (not illustrated) that is a source of the display information IF1, IF2, IF3, or IF4 illustrated in FIGS. 6 to 9.

The web application 29 is a program for causing a computer to function as the information processing apparatus 110.

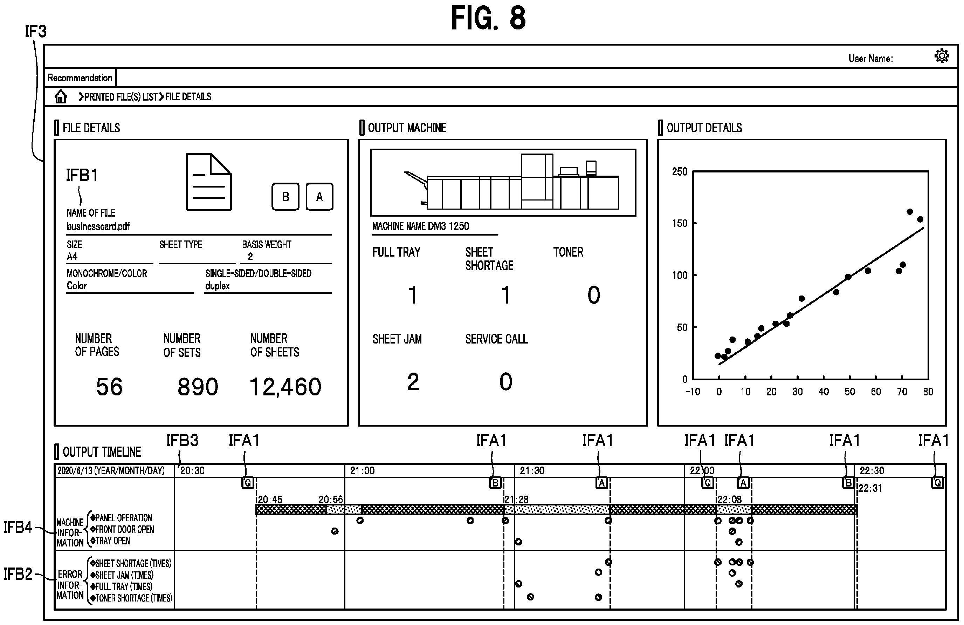

In such a configuration of the image forming system 100, log information indicating an environment condition or a machine condition of each image forming apparatus 130 is transmitted from the image forming apparatus 130 to the information processing apparatus 110, which is a server on cloud. The log information is transmitted via a log collecting apparatus 120 or directly, and is stored in the log database 21 of the information processing apparatus 110. The information processing apparatus 110 generates, for example, the display information IF1, IF2, IF3, or IF4 illustrated in FIGS. 6 to 9 based on the stored log information by the web application 29 in accordance with an operation content of the user. The information processing apparatus 110 displays the display information on a display device of an image forming apparatus 130 or a terminal device (a personal computer 140, a smartphone 141, or the like) (or on a display device connected to the information processing apparatus 110). Display information IF3 illustrated in FIG. 8 provides one example of how information may be displayed. As shown by display information IF3, time information IFB3 related to error information IFB2 indicating an error or machine information IFB4 may be displayed on a production timeline using different colors.

### Configuration of Image Forming Apparatus

A configuration of the image forming apparatus 130 will be described below with reference to FIG. 3. FIG. 3 illustrates a configuration of the image forming apparatus 130. The image forming apparatus 130 is, for example, an apparatus such as a copier which forms an image on an object, a sheet, by using an electrophotographic method. Here, a description will be provided on an assumption that the image forming apparatus 130 is a so-called tandem-type color image forming apparatus in which a plurality of photoreceptors are arranged in a longitudinal direction so as to face a single intermediate transfer belt to form a full-color image.

In the example illustrated in FIG. 3, the image forming apparatus 130 includes an image reading device SC, four image forming sections 131, a sheet feed section 132, a fixing device 212, a controller 133, a communication section 134, and a sheet conveyance section 301.
In one or more embodiments, the image forming apparatus 130 may be configured to not include the image reading device SC.

The image reading device SC scans and exposes an image of a document by an optical system of a scanning exposure device and reads reflected light thereof by a line image sensor, thereby obtaining an image signal. The image signal is subjected to processing such as analog-to-digital (A/D) conversion, shading correction, and compression and is then input to the controller 133 as image data. The image data input to the controller 133 is not limited to data read by the image reading device SC. The image data may be data received from an external device that is communicably connected to the image forming apparatus 130 via a communication section 134. The external device may, for example, be the information processing apparatus 110, personal computer 140, smartphone 141, or another image forming apparatus illustrated in FIG. 1.

The four image forming sections 131 include an image forming section 131Y, image forming section 131M, image forming section 131C, and image forming section 131K. The image forming section 131Y is configured to form a yellow (Y) image. The image forming section 131M that is configured to form a magenta (M) image. The image forming section 131C is configured to form a cyan (C) image. The image forming section 131K is configured to form a black (K) image.

The image forming section 131Y includes a photosensitive drum 201Y. The image forming section 131Y also includes a charging section 202Y, an optical writing section 203Y, a developing device 204Y, and a drum cleaner 205Y that are arranged around the photosensitive drum 201Y. Similarly, the image forming section 131M includes a photosensitive drum 201M. The image forming section 131M also includes a charging section 202M, an optical writing section 203M, a developing device 204M, and a drum cleaner 205M that are arranged around the photosensitive drum 201M. Similarly, the image forming section 131C includes a photosensitive drum 201C. The image forming section 131C also includes a charging section 202C, an optical writing section 203C, a developing device 204C, and a drum cleaner 205C that are arranged around the photosensitive drum 201C. Similarly, the image forming section 131K includes a photosensitive drum 201K. The image forming section 131K also includes a charging section 202K, an optical writing section 203K, a developing device 204K, and a drum cleaner 205K that are arranged around the photosensitive drum 201K.

Hereinafter, the photosensitive drums 201Y, 201M, 201C, and 201K may be collectively referred to as a photosensitive drum 201". The charging sections 202Y, 202M, 202C, and 202K may be collectively referred to as a "charging unit 202". The optical writing sections 203Y, 203M, 203C, and 203K may be collectively referred to as an "optical writing section 203". The developing devices 204Y, 204M, 204C, and 204K may be collectively referred to as a "developing device 204". Furthermore, drum cleaners 205Y, 205M, 205C, and 205K may be collectively referred to as a "drum cleaner 205".

Charging sections 202Y to 202K uniformly charge the surfaces of photosensitive drums 201Y to 201K. The optical writing sections 203Y to 203K form latent images on the surfaces of the photosensitive drums 201Y to 201K by scanning and exposure. The developing devices 204Y to 204K visualize the latent images on the surfaces of the photosensitive drums 201Y to 201K by developing the latent images with toner. Thus, toner images of a predetermined color corresponding to yellow, magenta, cyan, or black are formed on the surfaces of the photosensitive drums 201Y to 201K.

The image forming apparatus 130 includes an intermediate transfer belt 206 and primary transfer rollers 207Y, 207M, 207C, and 207K. The intermediate transfer belt 206 is disposed so as to face the photosensitive drums 201Y, 201M, 201C, and 201K. The primary transfer rollers 207Y, 207M, 207C, and 207K are disposed on an inner peripheral side of the intermediate transfer belt 206. By attracting the toner images of the respective colors formed on the surfaces of the photosensitive drums 201Y to 201K in synchronization with the traveling of the intermediate transfer belt 206, the primary transfer rollers 207Y, 207M, 207C, and 207K sequentially transfer the toner images of the respective colors to predetermined positions on a surface of the intermediate transfer belt 206. Thus, a color toner image made from the individual colors is formed on the surface of the intermediate transfer belt 206. Hereinafter, the primary transfer rollers 207Y, 207M, 207C, and 207K may be collectively referred to as a "primary transfer roller 207".

In the image forming apparatus 130, the sheet conveyance section 301 transports a sheet along a conveyance path provided in the apparatus. The sheet may be supplied from a sheet feed section 132 provided inside the apparatus or from a sheet feed device (not illustrated) provided external to the apparatus. In this embodiment, it is assumed that the image forming apparatus 130 includes three sheet feed trays 132a, 132b, and 132c in the sheet feed section 132.

The image forming apparatus 130 includes a secondary transfer roller 211 that is disposed on an inner peripheral side of the intermediate transfer belt 206. The image forming apparatus 130 causes the secondary transfer roller 211 to transfer the color toner image that has been transferred onto the intermediate transfer belt 206 onto a sheet conveyed by the sheet conveyance section 301 at a predetermined timing. The secondary transfer roller 211 is disposed so that it comes into contact with and be pressed onto the intermediate transfer belt 206.

With the fixing device 212 that is provided on a downstream side of the secondary transfer roller 211, the image forming apparatus 130 applies heat and pressure to the sheet on which the toner image has been transferred, thereby fixing the toner image to the sheet. Thereafter, the image forming apparatus 130 conveys the sheet on which the toner image has been fixed to a sheet ejection tray 302 and collects the sheet on the sheet ejection tray 302.

In the illustrated example, the image forming apparatus 130 includes a display device 130a on which a touch panel (not illustrated) is disposed. The controller 133 of the image forming apparatus 130 receives an instruction or information input by an operator through the touch panel (not illustrated) disposed on a surface of the display device 130a. Further, the controller 133 of the image forming apparatus 130 receives, via the communication section 134, an instruction or information input by an operator with the information processing apparatus 110, a personal computer 140, or a smartphone 141 provided outside the image forming apparatus 130.

In the present embodiment, the image forming section 131 of the image forming apparatus 130 includes a temperature and humidity sensor 136 and a heater 137. The temperature and humidity sensor 136 is an environment information detector that detects temperature and humidity in the image forming section 131 as environment information. The heater 137 is an environment changer that changes an environment in the image forming section 131.

The sheet feed section 132 of the image forming apparatus 130 includes a temperature and humidity sensor 138 and a heater 139. The temperature and humidity sensor 138 is an environment information detector that detects temperature and humidity in the sheet feed section 132 as environment information. The heater 139 is an environment changer that changes an environment in the sheet feed section 132.

### Operation of Information Processing Apparatus

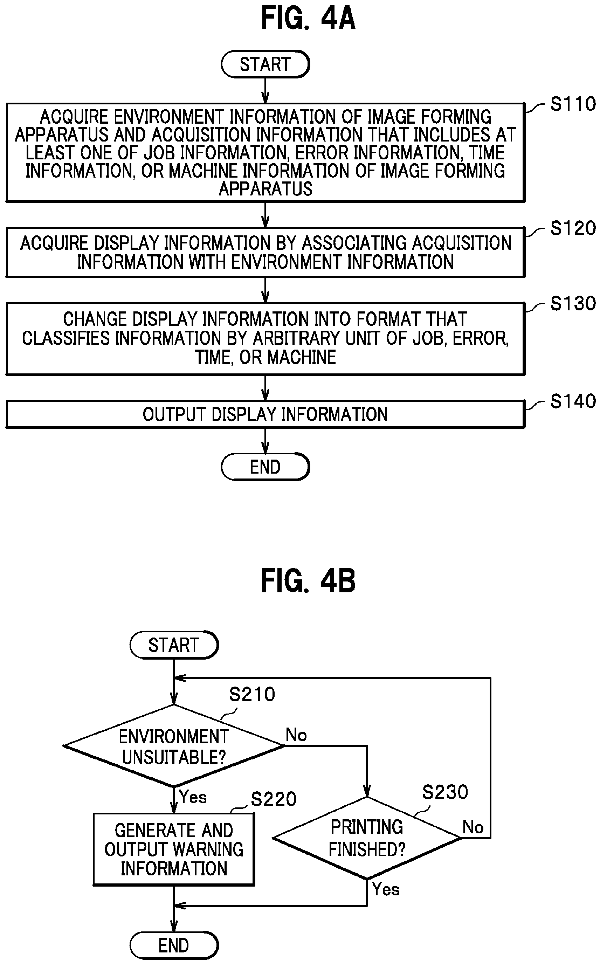

An operation of the information processing apparatus 110 will be described with reference to FIGS. 4A to 4C. Figs. 4A to 4C are flowcharts illustrating operation examples of the information processing apparatus 110. However, the operations shown in FIGS. 4A to 4C are merely examples and may be appropriately changed according to the operation.

FIG. 4A illustrates an example of an operation in a case where the display information including the environment information (for example, the display information IF1, IF2, IF3, and IF4 illustrated in FIGS. 6 to 9) is generated and displayed on a display.

As illustrated in FIG. 4A, in the information processing apparatus 110, the log acquirer 11 of the controller 10 acquires, from an image forming apparatus 130, environment information and acquisition information of the image forming apparatus 130 (step S110). The acquisition information includes at least one of job information, error information, time information, or machine information. At this time, the log acquirer 11 of the controller 10 stores the environment information and the acquisition information in the log database 21 of the storage 20. Then, the log analyzer 12 of the controller 10 analyzes the environment information and the acquired information, and the information processor 13 generates display source information (not shown) which is a source of display information (for example, display information IF1, IF2, IF3, or IF4 shown in FIGS. 6 to 9) and stores the display source information in the processing result database 22 of the storage 20.

After step S110, the log analyzer 12 of the controller 10 reads and analyzes the environment information and the acquisition information stored in the log database 21. Then, the log analyzer 12 associates the acquired information with the environment information and acquires (generates) display information (more specifically, for example, display source information [not illustrated] serving as a source of the display information IF1, IF2, IF3, or IF4 illustrated in FIGS. 6 to 9) (step S120). At this time, the log analyzer 12 stores the acquired (generated) display information (more specifically, for example, display source information [not illustrated] that is a source of the display information IF1, IF2, IF3, or IF4 illustrated in FIGS. 6 to 9) in the processing result database 22 of the storage section 20.

After step S120, when a user instructs that display information be displayed, the controller 10 reads out the display information stored in the processing result database 22 and changes the display information into a format that classifies information by arbitrary unit (item) out of job, error, time, or machine (step S130).

After step S130, the controller 10 outputs the display information (for example, the display information IF1, IF2, IF3, or IF4 illustrated in FIGS. 6 to 9) to a display (a display device 110a, 130a, or 140a [FIG. 1] or a touch screen 141a [FIG. 1]) and causes the display to display the display information (Step 140). Then, the processing of the routine illustrated in FIG. 4A ends.

FIG. 4B shows an example of an operation in a case of determining whether or not an environment of the image forming apparatus 130 is an unsuitable environment.

As illustrated in Fig. 4B, in the information processing apparatus 110, the warning determiner 17 of the controller 10 reads the environment information and the acquired information stored in the log database 21 of the storage 20 at an arbitrary timing before performing printing. The warning determiner 17 then determines whether an environment of the image forming apparatus 130 is an unsuitable environment for printing (step S210).

When it is determined in step S210 that the environment is unsuitable for printing (a case of "Yes"), the warning determiner 17 generates warning information for warning a user of the unsuitable environment. The warning determiner 17 outputs and displays the warning information on a display (e.g., a display device 110a or 130a [FIG. 1] or a touch screen 141a [FIG. 1]) (step S220). Then, the processing of the routine illustrated in FIG. 4B ends. Note that in a case where the image forming apparatus 130 or the information processing apparatus 110 is provided with a speaker (not illustrated), the warning determiner 17 may output the warning information as a sound from the speaker (not illustrated).

On the other hand, when it is determined in step S210 that the environment is not an unsuitable environment for printing (a case of "No"), the warning determiner 17 determines whether printing is finished (step S230).

When it is determined in step S230 that the printing is not finished (a case of "No"), the process returns to step S210.

On the other hand, in a case where it is determined in step S230 that the printing is finished (a case of "Yes"), the processing of the routine shown in FIG. 4B ends.

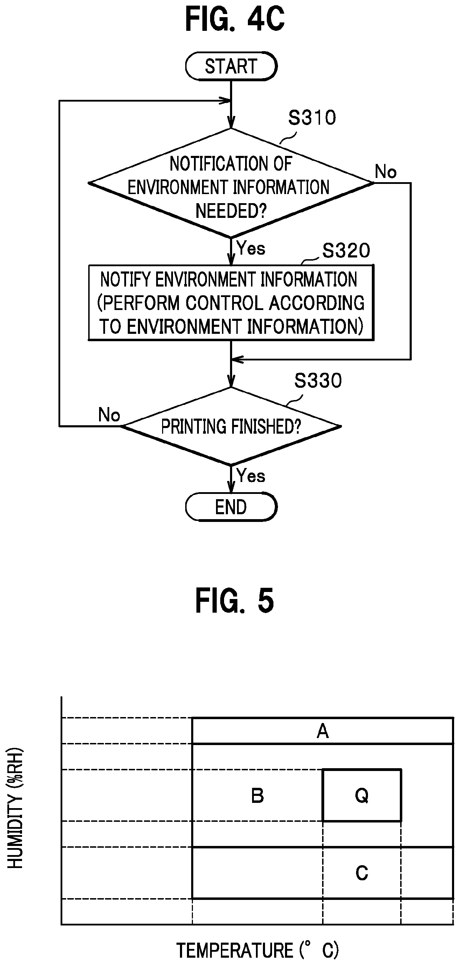

FIG. 4C illustrates an example of an operation when it is determined whether or not notification of environment information is necessary.

As illustrated in FIG. 4C, in the information processing apparatus 110, the environment information notifier 18 of the controller 10 reads the environment information and the acquired information stored in the log database 21 of the storage 20 at an arbitrary timing prior to printing. The environment information notifier 18 then determines whether notification of the environment information of the image forming apparatus 130 is needed (step S310).

When it is determined that the notification of the environment information is necessary in the determination of step S310 (a case of "Yes"), the environment information notifier 18 notifies of the environment information (step S320). The notification of the environment information is performed by outputting and displaying the environment information on a display (e.g., a display device 110a or 130a [FIG. 1] or a touch screen 141a [FIG. 1]). By viewing the environment information displayed on the display, a user may activate an environment changer of a room where the image forming apparatus 130 is installed or may activate an environment changer that the image forming apparatus 130 is equipped with. The environment changer of a room is, for example, a heater, an air conditioner, a dehumidifier, or the like. The environment changer provided in the image forming apparatus 130 is, for example, the heater 137 or heater 139 (FIG. 3). At this time, the environment information notifier 18 may output a control signal based on the environment information to the environment changer (for example, the heater 137 or 139 [FIG. 3]) to cause the environment changer (for example, the heater 137 or 139 [FIG. 3]) to execute control in accordance with the environment information.

When on the other hand it is determined that notification of the environment information is not necessary (a case of "No") in the determination of step S310 or after step S320, the environment information notifier 18 determines whether printing is finished (step S330).

If it is determined in step S330 that printing is not finished (a case of "No"), the process returns to step S310.

On the other hand, in the determination of step S330, when it is determined that printing is finished (a case of "Yes"), the processing of the routine illustrated in FIG. 4C ends.

### Example of Classifying Environment Information (e.g., Temperature and Humidity Information) into Sections

The information processing apparatus 110 generates display information including environment information (for example, temperature and humidity information) that is classified into arbitrary zones and displays the display information on the display. Accordingly, the information processing apparatus 110 improves identifiability of the environment information (for example, temperature and humidity information) and presents the display information that includes the environment information (for example, temperature and humidity information) with improved identifiability to a user.

The classification of the environment information (e.g., temperature and humidity information) will be described below with reference to FIG. 5. FIG. 5 is a graph illustrating an example of a classification of temperature and humidity information as environment information into sections. However, the classification shown in FIG. 5 is merely an example, and the classification may be appropriately changed according to an operation.

FIG. 5 shows an example in which an environment of the image forming apparatus 130 is classified into the following four zones according to temperature and humidity: zone Q, zone B, zone C, and zone A.

Zone Q is a zone in which printing with the largest maximum number of printed sheets and printing with the fastest printing speed may be set.

Zone B is a zone in which printing with a maximum number of printed sheets that is next largest to zone Q and printing with a printing speed that is relatively fast may be set.

Zone C is a zone in which printing with a maximum number of printed sheets that is next largest to zone Q and printing with a printing speed that is slower than that of zone B may be set.

Zone A is a zone in which printing with a maximum number of printed sheets that is smallest and printing with a printing speed that is slowest may be set.

Any other zones are zones unsuitable for printing.

In other words, among zones A, B, C, and Q, zone Q is the most preferable zone (optimum zone) for printing (image formation). Zone B is the next preferable zone for printing (image formation) to zone Q. Zone C is the next preferable zone for printing (image formation) to zone B. Zone A is the least favorable zone (unsuitable zone) for printing (image formation). Zone Q is set with a maximum number of printed sheets that is largest. Zone B and zone C are set with a maximum number of printed sheets that is next largest to zone Q. Although the maximum number of printed sheets is the same for zone B and zone C, the printing speed may be set to be higher for zone B than for zone C. Zone A is set to have the smallest maximum number of printed sheets.

### Example Of Display Information

The information processing apparatus 110 presents display information that includes environment information (for example, temperature and humidity information) which is classified as illustrated in FIG. 5 to the user.

Hereinafter, display information will be described with reference to FIGS. 6 to 8. FIGS. 6 to 8 are explanatory diagrams each illustrating an example of display information. However, the display information shown in FIGS. 6 to 8 is merely an example, and may be appropriately changed according to operation.

Display information IF1 illustrated in FIG. 6 includes temperature and humidity information IFA1 as the environment information and job information IFB1 indicating a job. The display information IF1 may be in a format that classifies information by job as shown by the job information IFB1.

The display information IF1 illustrated in FIG. 6 displays the environment information on a job-by job basis. Here, description will be given on an assumption that the environment information is temperature and humidity information. The environment information may be information other than temperature and humidity information. For example, the environment information may be atmospheric pressure information, UFP information, ozone information, or the like. Here, the "UFP information" refers to information on ultrafine particles (UFPs) having a diameter of 0.1 *µ* m or less. The UFPs diffuse from the image forming apparatus 130.

In the display information IF1 shown in FIG. 6, by displaying the environment information on a job-byjob basis, it is possible to check which job carries out printing in a temperature and humidity range of high productivity. That is, it is possible to check when a printing environment has been good or bad from the display information IF1 shown in FIG. 6. The display information IF1 illustrated in FIG. 6 is displayed in association with a number of printed sheets (a number of pages, number of copies), an imaging condition (monochrome/color, single-sided/double-sided), and sheet information (sheet size, sheet type, basis weight) so that a printing environment may be easily analyzed. The display information IF1 is thus able to improve a printing process. Here, an improvement of a printing process refers to, for example, scheduling printing to be carried out in the morning when the temperature will be low in a case where the temperature of the paper feed section 132 is high.

In order to display the environment information on a job-by job basis, a worst value of a printing environment such as temperature and humidity, an average value of the printing environment, or a variation range of the printing environment may be made selectable by the user. By selecting these information, the information processing apparatus 110 may visualize which parameter of the printing environment is affecting the productivity of a job when the printing environment such as temperature and/or humidity changes during an execution of the job.

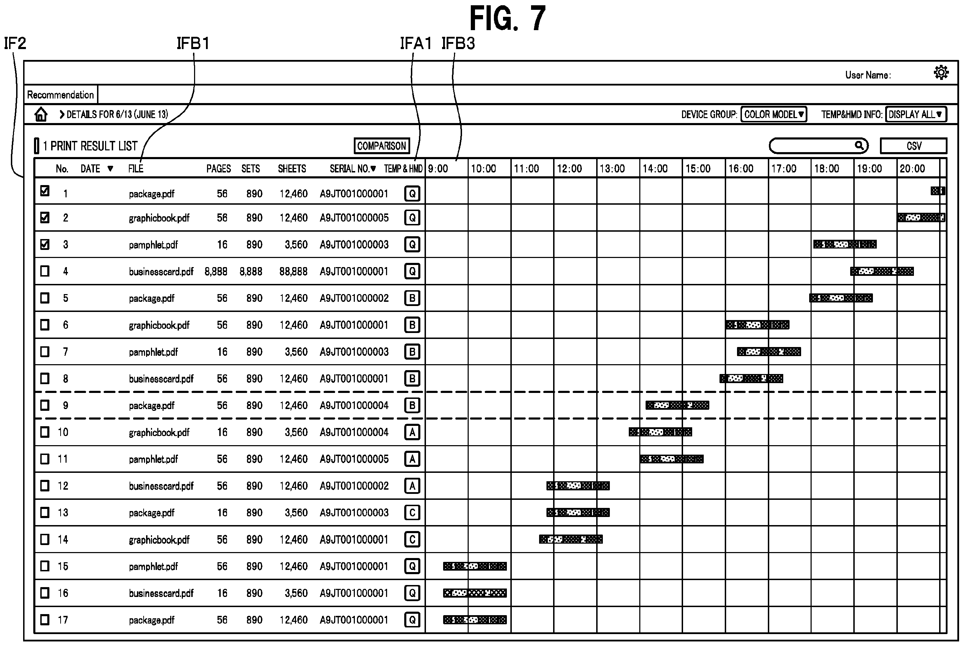

Display information IF2 shown in FIG. 7 includes temperature and humidity information IFA1 as the environment information, job information IFB1, and time information IFB3. The display information IF2 is configured so that a horizontal straight line (a bar) is added to a timeline of the time information IFB3. A print execution state and print standby state are indicated with the horizontal straight line. It should be noted that a portion of the horizontal straight line having a darker shade indicates a print execution state and a portion of the horizontal straight line having a lighter shade indicates a print standby state. Further, information surrounded by a broken line in the drawing shows information on a job for which printing is being carried out.

The display information IF2 illustrated in FIG. 7 brings together (unifies) and displays environment information for each day (displays a list for each day), thereby enabling a user to check which time zone has a temperature and humidity range of high productivity and check whether printing is performed in that time zone. For example, in a case where humidity tends to increase in the daytime due to outside air with high humidity coming in, the printing environment may be improved by causing the user to close the window and operate an air conditioner even during an operation of a printing process. In such a case where the printing environment is poor, by presenting to a user display information IF2 in which the environment information for each day is brought together (unified), the information processing apparatus 110 is able to facilitate the user into taking measures.

Display information IF3 shown in FIG. 8 includes temperature and humidity information IFA1 as the environment information, job information IFB1, error information IFB2 related to an error, time information IFB3, and machine information IFB4 related to a machine. The display information IF3 is configured so that a horizontal straight line (a bar) or an arbitrary mark (circular mark in the illustrated example) may be added to a timeline of the time information IFB3. The horizontal straight line or the arbitrary mark may indicate an occurrence of error information IFB2 or machine information IFB4.

In FIG. 8, as an example of the error information IFB2, "sheet shortage (times)", "sheet jam (times)", "full tray (times)", and "toner shortage (times)" are shown. In these items, the term "(times)" represents a number of times. The "sheet shortage (times)" indicates a state in which there are no sheets stored in the sheet feed section 132 (FIG. 3). The "sheet jam (times)" indicates a state in which a sheet conveyance error has occurred inside the image forming apparatus 130. The "full tray (times)" indicates that the sheet ejection tray 302 (FIG. 3) is full. The "toner shortage (times)" indicates a state in which the toner in the image forming section 131 has run out.

Further, in FIG. 8, as an example of the machine information IFB4, "panel operation", "front door open", and "tray open" are shown. The "panel operation" indicates that a panel has been operated by a user. The "front door open" indicates that a front door has been opened by a user. The "tray open" indicates that a tray has been opened by a user.

The display information IF3 illustrated in FIG. 8 is configured to display the environment information in association with the machine information IFB4 (e.g., panel operation, front door open, tray open) and the error information IFB2 (e.g., sheet shortage, sheet jam, full tray, toner shortage). By presenting the user with the display information IF3 in which the machine information IFB4, the error information IFB2, or the like is displayed in time series, the information processing apparatus 110 may prompt the user to analyze an environment in which an error can occur and consequently improve the printing process.

The display information IF3 illustrated in FIG. 8 includes a file detail field indicating detail information of a file. The file detail field displays information such as the number of pages to be printed, number of copies to be made, and number of sheets to be passed through total number of sheets.

Further, the display information IF3 shown in FIG. 8 includes an output-machine field indicating information relating to an output machine. The output-machine field displays information on the number of times the tray has become full, sheet shortage has occurred, toner shortage has occurred, sheet jam has occurred, service calls have been made, or the like and a name of the machine.

Further, the display information IF3 illustrated in FIG. 8 includes an output-detail field indicating detailed information on output. The output-detail field displays information such as a solid line indicating a print execution schedule and a point indicating an actual print time.

In order to make it easier to analyze whether a temperature and/or humidity change is linked to an occurrence of a printing error, the information processing apparatus 110 may display information IF3 of FIG. 8. The display information IF3 is configured so that sampling of temperature and humidity is made at an interval of a few to several seconds and, while the temperature and humidity remain unchanged, the display remains unchanged but, when the temperature and/or humidity changes, the time of change and the temperature and humidity at that time are displayed.

In addition, the information processing apparatus 110 may generate the display information IF3 shown in FIG. 8 to make the temperature and/or humidity change easier to grasp. The display information IF3 shown in FIG. 8 is configured to be able to display a change in range made during a job. For example, in the example illustrated in FIG. 8, marks "B" and "A" indicating a change from zone B to zone A are displayed in the file detail field as the "change in range made during a job".

Further, the information processing apparatus 110 may generate the display information IF3 of FIG. 8 so that the temperature and/or humidity change information and job interruption information are associated with each other by changing a color or shade of a horizontal straight line (bar) displayed for job information.

The display information IF1, IF2, and IF3 shown in FIGS. 6 to 8 are configured to include environment information (temperature and humidity information IFA1) that is classified into arbitrary zones. By visualizing the environment information (temperature and humidity information IFA1) of the image forming apparatus 130 in time series, the display information IF1, IF2, and IF3 can easily inform the user whether or not printing is being performed in a productive temperature and humidity range. In particular, the display information IF2 and IF3 illustrated in FIGS. 7 and 8 can more easily inform the user whether printing is performed in a productive temperature and humidity range by visualizing the environment information (temperature and humidity information IFA1) of the image forming apparatus 130 along a timeline.

In addition, in the display information IF3 illustrated in FIG. 8, by displaying the error information IFB2 or the like along a timeline, it is possible to prompt the user to analyze an environment in which an error may occur and thus enable a printing process to be improved.

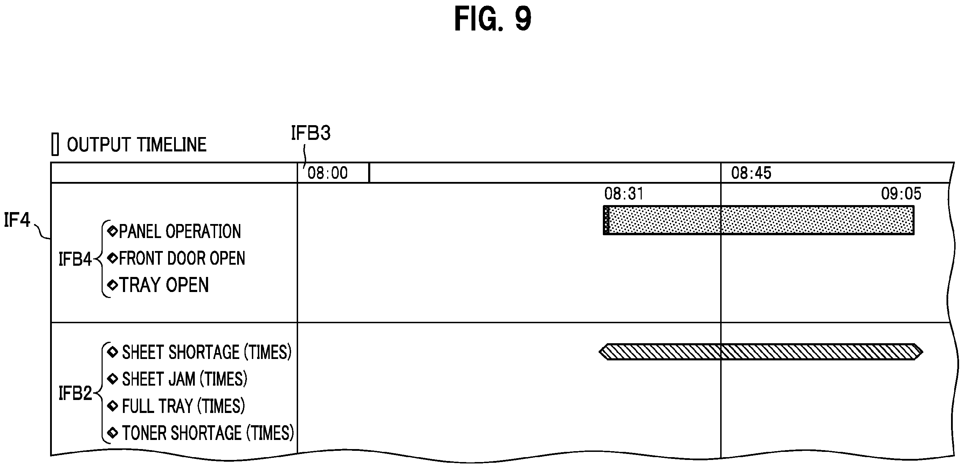

Each display information may be changed according to operation. For example, the error information IFB2 of the display information IF3 illustrated in FIG. 8 may be modified to display information IF4 illustrated in FIG. 9. FIG. 9 is an explanatory diagram showing a modification of display information. In the display information IF4 illustrated in FIG. 9, a start of occurrence timing and an end of occurrence timing are indicated by points, and an occurrence period is indicated by a horizontal straight line (bar) connecting the points of the start of occurrence timing and the end of occurrence timing.

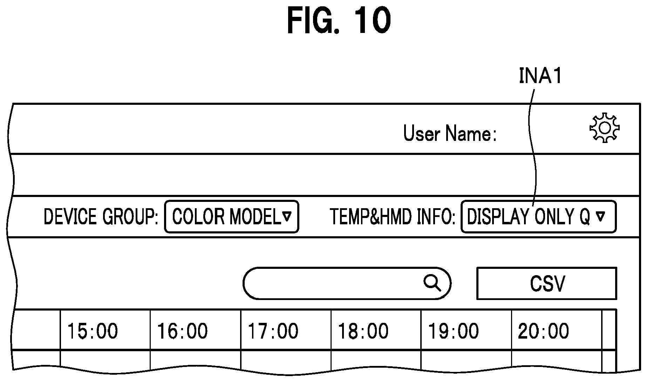

As each display information, for example, as shown in FIG. 10, arbitrary information may be selectively displayed. FIG. 10 is an explanatory diagram of a case where arbitrary environment information is specified. In the example illustrated in FIG. 10, instruction information instructing to "display only (zone) Q" has been input in an input field INA1 for temperature and humidity information. The display information generator 15 (FIG. 2) of the information processing apparatus 110 extracts, processes, or edits a part of or combines parts of the aforementioned "display source information (not illustrated)" stored in the processing result database 22. In this way, the display information generator 15 (FIG. 2) generates display information that corresponds to the instruction information input in the input field INA1. Thereafter, the display information output section 16 (FIG. 2) of the information processing apparatus 110 outputs the generated display information to the display for display.

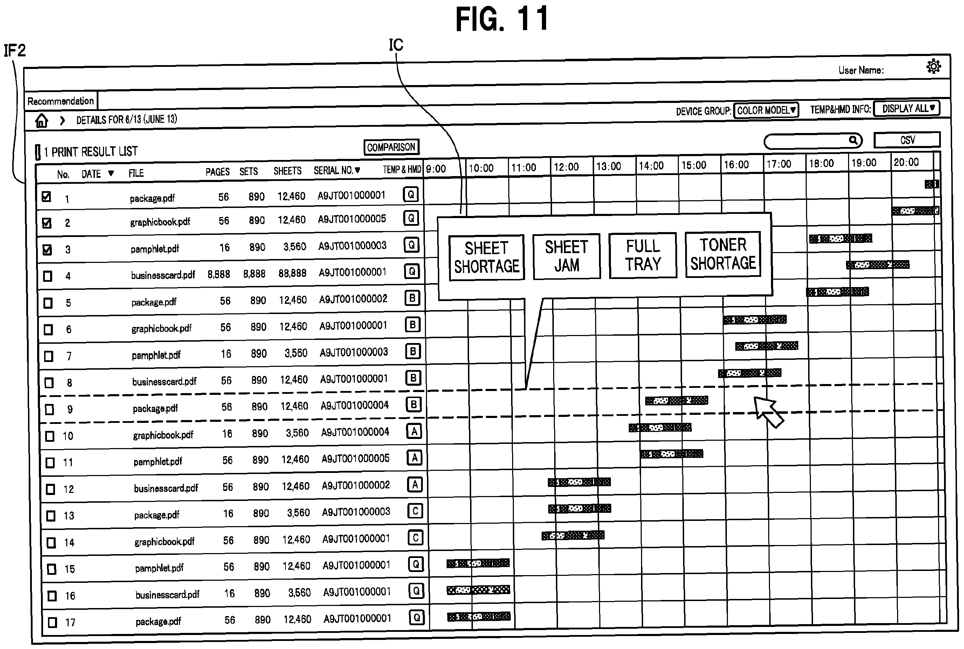

As illustrated in FIG. 11, the information processing apparatus 110 may be configured to display a display icon IC as a pop-up. The display icon IC is an icon for displaying arbitrary information (for example, the error information IFB2 [FIG. 8], machine information IFB4 [FIG. 8], environment information [temperature and humidity information IFA1 [FIGS. 6 to 8]], or the like). FIG. 11 is an explanatory diagram for the display icon IC. The example illustrated in FIG. 11 illustrates a state where a display icon IC corresponding to the error information IFB2 (FIG. 8) has popped up by placing a cursor at an arbitrary position.

Conventionally, it was not known in what kind of temperature and humidity environment printing was being carried out. With a configuration of the embodiment, by visualizing the temperature and humidity information, the information processing apparatus 110 enables a user to check with ease in what kind of temperature and humidity environment printing is performed.

In addition, the information processing apparatus 110 may prompt the user to analyze an environment in which an error can occur by presenting the user with the display information IF3 in which the machine information IFB4, error information IFB2, or the like is displayed in a time series. The information processing apparatus 110 may make arbitrary information other than the machine information IFB4 and the error information IFB2 visible.

In one or more embodiments, various kinds of information used for the display information is converted into big data by a server (not shown) and optimized.

### Main Features of Information Processing Apparatus and the Like

(1) As illustrated in FIGS. 2 and 4A, An information processing apparatus 110 according to one or more embodiments includes a log acquirer 11 (acquirer) and a display information generator 15. The log acquirer 11 (acquirer) is a constituent element for acquiring acquisition information of an image forming apparatus 130 and environment information of the image forming apparatus 130. The acquisition information of the image forming apparatus 130 includes at least one of job information IFB1 (FIG. 8), error information IFB2 (FIG. 8), time information IFB3 (FIG. 8), or machine information IFB4 (FIG. 8). The environment information of the image forming apparatus 130 includes, for example, temperature and humidity information IFA1 (FIGS. 6 to 8) or the like. The display information generator 15 associates the acquisition information, which has been acquired by the log acquirer 11 out of the job information IFB1 (FIG. 8), the error information IFB2 (FIG. 8), the time information IFB3 (FIG. 8), or the machine information IFB4 (FIG. 8), with the environment information (temperature and humidity information IFA1 [FIGS. 6 to 8]). The display information generator 15 generates display information to be displayed on a display (a display device 110a, 130a, or 140a [FIG. 1] or a touch screen 141a [FIG. 1]).
   An information processing apparatus 110 according to such an embodiment enables an environment of the image forming apparatus 130 to be improved by suitably notifying a user of a usage environment (for example, a range of temperature and humidity).
(2) In one or more embodiments, the environment information (the temperature and humidity information IFA1 [FIGS. 6 to 8]) includes temperature and humidity information.
   Since an information processing apparatus 110 according to such an embodiment can provide display information including temperature and humidity information to the user, it is possible to notify a user on whether a temperature and humidity environment is suitable for image formation (printing).
(3) In one or more embodiments, the display information generator 15 is configured to change display information generated by associating the job information IFB1 (FIG. 8) with the environment information (the temperature and humidity information IFA1 [FIGS. 6 to 8]) into a format that classifies information by job. Alternatively, the display information generator 15 is configured to change display information generated by associating the error information IFB2 (FIG. 8) with the environment information (temperature and humidity information IFA1 [FIGS. 6 to 8]) into a format that classifies information by error. Alternatively, the display information generator 15 is configured to change display information generated by associating the time information IFB3 (FIG. 8) with the environment information (temperature and humidity information IFA1 [FIGS. 6 to 8]) into a format that classifies information by time. Alternatively, the display information generator 15 is configured to change display information generated by associating the machine information IFB4 (FIG. 8) with the environment information (temperature and humidity information IFA1 [FIGS. 6 to 8]) into a format that classifies information by machine.
   An information processing apparatus 110 according to such an embodiment generates display information by associating acquisition information with environment information (temperature and humidity information IFA1 [FIGS. 6 to 8]). Here, the acquisition information is information acquired by the acquirer (the log acquirer 11) out of job information IFB1 (FIG. 8), error information IFB2 (FIG. 8), time information IFB3 (FIG8), or machine information IFB4 (FIG. 8). Then, the information processing apparatus 110 changes the display information into a format that classifies information by an associated item. Thus, the information processing apparatus 110 can improve identifiability of the display information, and can present the display information with improved identifiability to a user. By changing the display information into a format that classifies information by the associated item, identifiability of the display information can be improved, and the display information with the improved identifiability can be presented to a user.
(4) As illustrated in FIGS. 6 and 7, in one or more embodiments, the display information generator 15 is configured to generate display information in which the environment information (temperature and humidity information IFA1) is unified for each day.
   An information processing apparatus 110 according to such an embodiment can improve identifiability of display information by generating display information with unified information for each day, and can present display information with improved identifiability to a user.
(5) As illustrated in FIG. 7, in one or more embodiments, the display information generator 15 is configured to generate display information that is unified for each day and is sorted according to the environment information (temperature and humidity information IFA1).
   An information processing apparatus 110 according to such an embodiment can further improve the identifiability of display information by generating the display information that is unified for each day and rearranged according to the environment information (temperature and humidity information IFA1), and can present the display information with further improved identifiability to a user.
(6) As illustrated in FIGS. 7 and 8, in one or more embodiments, the display information generator 15 is configured to generate display information that displays the environment information (temperature and humidity information IFA1) along a time axis.
   An information processing apparatus 110 according to such an embodiment can improve identifiability of display information by generating the display information in which the environment information (temperature and humidity information IFA1) is displayed along a time axis, and can present the display information with improved identifiability to a user.
(7) As illustrated in FIGS. 8 and 9, in one or more embodiments, the display information generator 15 may be configured to generate display information by associating the machine information IFB4 (FIG. 8) with the environment information (temperature and humidity information IFA1).
   An information processing apparatus 110 according to such an embodiment can, by generating display information in which machine information IFB4 (FIG. 8) is associated with environment information (temperature and humidity information IFA1), present a user with what kind of machine is being used.
(8) As shown in FIG. 7, in one or more embodiments, the display information generator 15 is configured to generate display information in which the environment information (temperature and humidity information IFA1) is classified into arbitrary sections.
   An information processing apparatus 110 according to such an embodiment can present display information in which identifiability of the environment information (temperature and humidity information IFA1) is improved to a user by generating the display information in which the environment information (temperature and humidity information IFA1) is classified into arbitrary sections.
(9) In one or more embodiments, the environment information (temperature and humidity information IFA1 [FIGS. 6 to 8]) of the image forming apparatus includes environment information of an image forming section 131 provided in the image forming apparatus 130.
   An information processing apparatus 110 according to such an embodiment can present display information including environment information of an image forming section 131 to a user.
(10) As shown in FIG. 2, an information processing apparatus 110 according to one or more embodiments includes a warning determiner 17 that determines whether to issue a warning to a user. The warning determiner 17 is configured to determine whether an environment of an image forming section 131 provided in the image forming apparatus 130 is unsuitable for image formation and generate warning information in a case where the environment is unsuitable.
   An information processing apparatus 110 according to such an embodiment can provide warning information to a user when an environment of an image forming section 131 is unsuitable for image formation.
(11) As illustrated in FIG. 2, an information processing apparatus 110 according to one or more embodiments include an environment information notifier 18 that outputs a control signal based on the environment information (temperature and humidity information IFA1 [FIGS. 6 to 8]) of the image forming apparatus 130 to an environment changer (heater 137). The environment information (temperature and humidity information IFA1 [FIGS. 6 to 8]) includes environment information of an image forming section 131 provided in the image forming apparatus 130. The environment information notifier 18 is configured to cause the environment changer (the heater 137) to perform control in accordance with the environment information of the image forming section 131 by outputting a control signal based on the environment information of the image forming section 131 to the environment changer (the heater 137).
   An information processing apparatus 110 according to such an embodiment can perform image formation (printing) in a state where an environment of an image forming section 131 has been improved by causing an environment changer (a heater 137) to perform control according to environment information of the image forming section 131.
(12) In one or more embodiments, the environment information (temperature and humidity information IFA1 [FIGS. 6 to 8]) of the image forming apparatus 130 includes environment information of a sheet feed section 132 provided in the image forming apparatus 130.
   An information processing apparatus 110 according to such an embodiment can present display information that includes environment information of the sheet feed section 132 to a user.
(13) As illustrated in FIG. 2, an information processing apparatus 110 according to one or more embodiments includes a warning determiner 17 that determines whether to issue a warning to a user.
   The warning determiner 17 is configured to determine whether an environment of a sheet feed section 132 provided in the image forming apparatus 130 is unsuitable for sheet feeding and generate warning information when the environment is unsuitable.
   An information processing apparatus 110 according to such an embodiment can provide a user with warning information in a case where an environment of a sheet feed section 132 is unsuitable.
(14) As illustrated in FIG. 2, an information processing apparatus 110 according to one or more embodiments includes an environment information notifier 18 that is configured to output a control signal based on the environment information (the temperature and humidity information IFA1 [FIGS. 6 to 8]) of the image forming apparatus 130 to an environment changer (heater 139). The environment information (temperature and humidity information IFA1 [FIGS. 6 to 8]) includes environment information of a sheet feed section 132 provided in the image forming apparatus 130. The environment information notifier 18 is configured to cause the environment changer (heater 139) to perform control in accordance with the environment information of the sheet feed section 132 by outputting a control signal based on the environment information of the sheet feed section 132 to the environment changer (the heater 139).
   By causing an environment changer (heater 139) to perform control in accordance with environment information of a sheet feed section 132, an information processing apparatus 110 according to such an embodiment can perform image formation (printing) by supplying a sheet to an image forming section 131 in a state where the environment of the sheet feed section 132 is improved.
(15) As illustrated in FIG. 11, in one or more embodiments, a screen displayed on the display (display device 110a or 130a [FIG. 1] or touch screen 141a [FIG. 1]) based on the display information is configured to display a display icon IC as a pop-up. The display icon IC may be an icon for displaying the environment information (temperature and humidity information IFA1 [FIGS. 6 to 8]). An information processing apparatus 110 according to such an embodiment is configured such that a display icon IC is not constantly displayed but is popped up. Therefore, it is possible to prevent the display from being filled with the display icon IC, thereby improving the identifiability (viewability) of the display information.
(16) As illustrated in FIG. 7, in one or more embodiments, the display information generator 15 is configured to generate display information whose information is narrowed down by the environment information (temperature and humidity information IFA1 [FIGS. 6 to 8]) of the image forming apparatus 130.
   An information processing apparatus 110 according to such an embodiment can improve the identifiability of display information by narrowing down information with the environment information (the temperature and humidity information IFA1 [FIGS. 6 to 8]), and can present display information with improved identifiability to a user.
(17) As illustrated in FIG. 3, an image forming apparatus 130 according to one or more embodiments includes a display (display device 130a). The image forming apparatus 130 is configured to be able to display, on the display, display information that is generated by associating at least one of job information, error information, time information, or machine information of the image forming apparatus 130 with environment information of the image forming apparatus 130.
   An image forming apparatus 130 according to such an embodiment enables its environment to be improved easily.
(18) As illustrated in Fig. 4A, a method according to one or more embodiments of controlling an image forming apparatus 130 may include an acquisition step and a display-information generation step. The acquisition step is a step of acquiring acquisition information and environment information (temperature and humidity information IFA1 [FIGS. 6 to 8]) of the image forming apparatus 130. The acquisition information includes at least one of job information IFB1 (FIG. 8), error information IFB2 (FIG. 8), time information IFB3 (FIG. 8), or machine information IFB4 (FIG. 8) of the image forming apparatus 130. The display information generation step is a step of generating display information by associating the acquisition information with the environment information (temperature and humidity information IFA1 [FIGS. 6 to 8]) that have been acquired by the acquisition step. Here, the acquisition information acquired by the acquisition step is information out of the job information IFB1 (FIG. 8), the error information IFB2 (FIG. 8), the time information IFB3 (FIG. 8), or the machine information IFB4 (FIG. 8) acquired by the acquisition step. The display information is information to be displayed on a display (display device 110a, 130a, or 140a [FIG. 1] or touch screen 141a (FIG. 1).
   A method for controlling the image forming apparatus 130 according to such an embodiment enables an environment of the image forming apparatus 130 to be improved easily.
(19) As illustrated in FIGS. 2 and 4A, a program (a web application 29) according to an embodiment is a program for causing a computer to function as a log acquirer 11 (acquirer) and a display information generator 15. The log acquirer 11 (acquirer) is a constituent element for acquiring acquisition information of an image forming apparatus 130 and environment information of the image forming apparatus 130. The acquisition information of the image forming apparatus 130 includes at least one of job information IFB1 (FIG. 8), error information IFB2 (FIG. 8), time information IFB3 (FIG. 8), or machine information IFB4 (FIG. 8) of the image forming apparatus 130. The environment information of the image forming apparatus 130 includes, for example, temperature and humidity information IFA1 (FIGS. 6 to 8) or the like. The display information generator 15 associates the acquisition information, which is the job information IFB1 (FIG. 8), the error information IFB2 (FIG. 8), the time information IFB3 (FIG. 8), or the machine information IFB4 (FIG. 8) that has been acquired by the log acquirer 11, with the environment information (temperature and humidity information IFA1 [FIGS. 6 to 8]). The display information generator 15 generates display information to be displayed on a display (display device 110a, 130a, or 140a [FIG. 1] or touch screen 141a [FIG. 1]).

A program (the web application 29) according to such an embodiment can realize an information processing apparatus 110 that enables an environment of an image forming apparatus 130 to be improved.

As described above, the information processing apparatus 110 according to the present embodiment enables an environment of an image forming apparatus 130 to be improved by suitably notifying the user of a usage environment (for example, a range of temperature and humidity).

Note that the disclosure is not limited to the above-described embodiments and various changes and modifications may be made without departing from the scope of the disclosure.

For example, the above-described embodiments have been described in detail in order to clearly describe the gist of the disclosure. The disclosure is not necessarily limited to an embodiment that includes all the constituent elements described above. Further, in an embodiment according to the disclosure, another constituent element may be added to a certain constituent element, or a part of constituent elements may be changed to another constituent element. In addition, in an embodiment according to the disclosure, a part of constituent elements may be deleted.

### Aspects

(4) A fourth aspect of the disclosure provides the information processing apparatus according to the first aspect, in which the display information generator is configured to generate display information in which the environment information is unified for each day.

(15) A fifteenth aspect of the disclosure provides the information processing apparatus according to the first aspect, in which a screen that is displayed on the display based on the display information is configured to display a display icon for displaying the environment information as a pop-up.

(16) A sixteenth aspect of the disclosure provides the information processing apparatus according to the first aspect, in which the display information generator is configured to generate display information whose information is narrowed down by the environment information.

(17) A seventeenth aspect of the disclosure provides an image forming apparatus including a display. Display information may be displayed on the display, the display information being generated by associating at least one of job information, error information, time information, or machine information of the image forming apparatus with environment information of the image forming apparatus.

Although embodiments of the disclosure have been described and illustrated in detail, the disclosed embodiments are made for purposes of illustration and example only and not limitation. The scope of the disclosure should be interpreted by terms of the appended claims.

## Claims

1. An information processing apparatus (110) comprising:
an acquirer (11) configured to acquire acquisition information and environment information of an image forming apparatus (130), the acquisition information including at least one of job information, error information, time information, or machine information of the image forming apparatus (130); and
a display information generator (15) configured to generate display information to be displayed on a display (110a, 130a, 140a, 141a) by associating the acquisition information with the environment information, the acquisition information being the job information, the error information, the time information, or the machine information that has been acquired by the acquirer (11).

2. The information processing apparatus (110) according to claim 1, wherein
the environment information includes temperature and humidity information.

3. The information processing apparatus (110) according to claim 1, wherein
the display information generator (15) is configured to:
change display information generated by associating the job information with the environment information into a format that classifies information by job;
change display information generated by associating the error information with the environment information into a format that classifies information by error;
change display information generated by associating the time information with the environment information into a format that classifies information by time; or
change display information generated by associating the machine information with the environment information into a format that classifies information by machine.

4. The information processing apparatus (110) according to claim 1, wherein
the display information generator (15) is configured to generate display information that is unified for each day and sorted according to the environment information.

5. The information processing apparatus (110) according to claim 1, wherein
the display information generator (15) is configured to generate display information that displays the environment information along a time axis.

6. The information processing apparatus (110) according to claim 1, wherein
the display information generator (15) is configured to generate display information by associating the machine information with the environment information.

7. The information processing apparatus (110) according to claim 1, wherein
the display information generator (15) is configured to generate display information in which the environment information is classified into arbitrary sections.

8. The information processing apparatus (110) according to claim 1, wherein
the environment information includes environment information of an image forming section (131, 131Y, 131M, 131C, 131K) provided in the image forming apparatus (130).

9. The information processing apparatus (110) according to claim 1, comprising:
a warning determiner (17) configured to determine whether to issue a warning to a user, wherein
the warning determiner (17) is configured to:
determine whether an environment of an image forming section (131, 131Y, 131M, 131C, 131K) provided in the image forming apparatus (130) is unsuitable for image formation; and
generate warning information when the environment is unsuitable.

10. The information processing apparatus (110) according to claim 1, comprising:
an environment information notifier (18) configured to output a control signal based on the environment information to an environment changer (137, 139), wherein
the environment information includes environment information of an image forming section (131, 131Y, 131M, 131C, 131K) provided in the image forming apparatus (130), and
the environment information notifier (18) is configured to cause the environment changer (137, 139) to perform control in accordance with the environment information of the image forming section (131, 131Y, 131M, 131C, 131K) by outputting a control signal based on the environment information of the image forming section (131, 131Y, 131M, 131C, 131K) to the environment changer (137, 139).

11. The information processing apparatus (110) according to claim 1, wherein
the environment information includes environment information of a sheet feed section (132) provided in the image forming apparatus (130).

12. The information processing apparatus (110) according to claim 1, comprising:
a warning determiner (17) configured to determine whether to issue a warning to a user, wherein
the warning determiner (17) is configured to:
determine whether an environment of a sheet feed section (132) provided in the image forming apparatus (130) is unsuitable for feeding a sheet; and
generate warning information when the environment is unsuitable.

13. The information processing apparatus (110) according to claim 1 comprising:
an environment information notifier (18) configured to output a control signal based on the environment information to an environment changer (137, 139), wherein
the environment information includes environment information of a sheet feed section (132) provided in the image forming apparatus (130), and
the environment information notifier (18) is configured to cause the environment changer (137, 139) to perform control in accordance with the environment information of the sheet feed section (132) by outputting a control signal based on the environment information of the sheet feed section (132) to the environment changer (137, 139).

14. A method for controlling an image forming apparatus (130), comprising:
acquiring acquisition information and environment information of the image forming apparatus (130), the acquisition information including at least one of job information, error information, time information, or machine information of the image forming apparatus (130); and
generating display information to be displayed on a display (110a, 130a, 140a, 141a) by associating the acquisition information with the environment information, the acquisition information being the job information, the error information, the time information, or the machine information that has been acquired.

15. A program (29) for causing a computer to perform operations comprising:
acquiring acquisition information and environment information of an image forming apparatus (130), the acquisition information including at least one of job information, error information, time information, or machine information of the image forming apparatus (130); and
generating display information to be displayed on a display (110a, 130a, 140a, 141a) by associating the acquisition information with the environment information, the acquisition information being the job information, the error information, the time information, or the machine information that has been acquired.
